# EUROPÄISCHE PATENTANMELDUNG

(11) **EP 3 943 226 A1**
(43) Veröffentlichungstag der Anmeldung: **26.01.2022**
(21) Anmeldenummer: 21185515.0
(22) Anmeldetag: 14.07.2021
(51) Int. Cl.: B23B 45/00, B23B 45/14, B23B 47/26, B25H 1/00

(54) **BOHRMASCHINE**

(30) Priorität: 20.07.2020 DE 202020104161 U
(71) Anmelder: C. & E. Fein GmbH, 73529 Schwäbisch-Gmünd-Bargau (DE)
(72) Erfinder: Seebauer, Ralf, 91522 Ansbach (DE)
(74) Vertreter: Wallinger, Michael

(57) **Zusammenfassung**

Eine Bohrmaschine, insbesondere Magnetkernbohrmaschine, weist einen Magnetfuß (3) zum lösbaren befestigen der Bohrmaschine an einer Oberfläche, einen in einem Gehäuse (4) aufgenommenen Antriebsmotor (5), der eine Rotorwelle (16) mit einer Rotorwellenlängsachse (17) aufweist, die über ein Getriebe (7) mit einer eine Spindellängsachse (14) aufweisenden Werkzeugspindel (8) kraftübertragend verbunden ist, sowie eine mit der Werkzeugspindel (8) verbundene Werkzeugaufnahme (12) zur Aufnahme eines Bohrwerkzeugs auf, wobei die Spindellängsachse (14) im Wesentlichen parallel zu der Rotorwellenlängsachse (17) ausgerichtet ist und die Werkzeugspindel (8) axial entlang der Spindellängsachse (14) relativ zu dem Antriebsmotor (5) und dem Magnetfuß (3) verstellbar ist.

## Beschreibung

Die Erfindung betrifft eine Bohrmaschine, insbesondere eine Magnetkernbohrmaschine, mit einem Magnetfuß zum lösbaren Befestigen der Bohrmaschine an einer Oberfläche, mit einem in einem Gehäuse aufgenommenen Antriebsmotor, der eine Rotorwelle mit einer Rotorwellenlängsachse aufweist, die über ein Getriebe mit einer eine Spindellängsachse aufweisenden Werkzeugspindel kraftübertragend verbunden ist, sowie mit einer mit der Werkzeugspindel verbundenen Werkzeugaufnahme zur Aufnahme eines Bohrwerkzeugs.

Derartige Bohrmaschinen bzw. Magnetkernbohrmaschinen sind aus dem Stand der Technik beispielsweise aus der EP 2 957 370 B1 bereits seit langem bekannt und werden üblicherweise dazu verwendet, Löcher in metallische Werkstücke zu bohren. Anstelle von Spiralbohrern werden bei diesen Magnetkernbohrmaschinen allerdings in der Regel Bohrkronen verwendet, um die Löcher in das Werkstück zu bohren.

Hierbei wird die Magnetkernbohrmaschine durch den Magnetfuß, dessen Magnetkraft üblicherweise verstellt werden kann, zunächst an dem Werkstück befestigt und dann die Werkzeugspindel mitsamt der daran befestigten Bohrkrone relativ zu dem Magnetfuß auf das Werkstück zu verstellt und zwar üblicherweise zusammen dem Antriebsmotor. Dies hat sich zwar als günstig erwiesen, da hierdurch eine vergleichbare einfache mechanische Lösung erreicht werden kann. Allerding hat es sich hierbei als nachteilig erwiesen, dass diese Magnetkernbohrmaschinen vergleichsweise hoch sind, so dass sich deren Einsatz in beengten Platzverhältnissen - beispielsweise bei der Verwendung der Magnetkernbohrmaschinen in Doppel-T-Trägern - als problematisch erwiesen hat.

Der vorliegenden Erfindung liegt daher die Aufgabe zugrunde, die vorgenannten Nachteile zu reduzieren und eine verbesserte, kompakte Bohrmaschine bereitzustellen.

Diese Aufgabe wird gemäß der Erfindung bei einer Bohrmaschine der eingangs genannten Art dadurch gelöst, dass die Spindellängsachse im Wesentlichen parallel zu der Rotorwellenlängsachse ausgerichtet ist und dass die Werkzeugspindel axial entlang der Spindellängsachse relativ zu dem Antriebsmotor und dem Magnetfuß verstellbar ist.

Insbesondere durch die im Wesentlichen parallele Ausrichtung der Rotorwellenlängsachse und der Spindellängsachse kann das Getriebe und damit die Kraftübertragung zwischen der Rotorwelle und der Spindellängsachse besonders einfach realisiert werden. So kann hierdurch beispielsweise auf eine Kegelradverzahnung verzichtet werden. Da gleichzeitig die Werkzeugspindel relativ zu dem Antriebsmotor verstellt werden kann, lässt sich durch diese Ausgestaltung eine sehr kompakte Bohrmaschine erreichen, deren Länge also äußerst kurz ausgeführt werden kann. Zudem wird hierdurch auch erreicht, dass das zu verstellende Gewicht reduziert wird, was sich positiv auf die Performance der Bohrmaschine auswirkt.

Besonders bewährt hat es sich im Rahmen der Erfindung auch, wenn der Antriebsmotor als ein elektrisch kommutierter Antriebsmotor ausgebildet ist. Durch die Verwendung eines elektrisch kommutierten Antriebsmotors, der häufig auch als EC-Motor bezeichnet wird, lässt sich die Baulänge des Antriebsmotors bei gleicher Motorleistung deutlich kürzer gestalten als beispielsweise bei einem Universalmotor, wodurch ein sehr niedriger Aufbau der Magnetkernbohrmaschine erreicht werden kann. Zudem reduziert sich bei der Verwendung eines EC-Motors auch der Wartungsaufwand, da diese Antriebsmotoren bürstenlos ausgestaltet sind.

Als vorteilhaft hat sich zudem auch erwiesen, wenn die Rotorwellenlängsachse radial versetzt zu der Spindellängsachse orientiert ist. Das heißt, dass die Rotorwelle und die Werkzeugspindel bezogen auf eine Bohrmaschinenlängsachse, die senkrecht zu der Rotorwellenlängsachse und der Spindellängsachse ausgerichtet ist, axial versetzt sind und damit letztlich nebeneinander angeordnet sind. Auch dies begünstigt einen kompakten Aufbau der erfindungsgemäßen Bohrmaschine. Hierdurch kann der Antriebsmotor letztlich neben und nicht mehr hinter der Werkzeugspindel angebracht werden, wodurch die Magnetkernbohrmaschine sehr kompakt gebildet werden kann.

Als günstig hat es sich auch gezeigt, wenn das Getriebe eine erste Getriebestufe, eine zweite Getriebestufe und eine dritte Getriebestufe umfasst. Durch die insgesamt drei Getriebestufen lässt sich die Kraft des Antriebsmotors besonders gut auf die Werkzeugspindel übertragen.

Wenn die Getriebestufen in einer Reihenanordnung angeordnet sind, so lässt sich ein sehr niedriger Aufbau der Bohrmaschine erreichen. Ein schlanker Aufbau wird noch dadurch weiter begünstigt, wenn die Getriebewellen der Getriebestufen in einer Ebene mit der Rotorwellenlängsachse und der Spindellängsachse liegen. Unter dem Begriff Getriebewelle wird dabei im Rahmen der Erfindung die Welle verstanden, auf der die einzelnen Getrieberäder, bzw. Zahnräder, der jeweiligen Getriebestufen drehfest befestigt sind.

Um eine möglichst große axiale Verstellung der Werkzeugspindel zu erreichen, hat es sich auch bewährt, wenn die Verzahnungseingriffe der einzelnen Getriebestufen axial gestaffelt sind. In diesem Zusammenhang hat es sich auch als besonders günstig erwiesen, wenn der Verzahnungseingriff der ersten Getriebestufe näher an dem Magnetfuß liegt als der Verzahnungseingriff der zweiten Getriebestufe und als der Verzahnungseingriff der dritten Getriebestufe, und wenn der Verzahnungseingriff der zweiten Getriebestufe näher an dem Magnetfuß liegt, als der Verzahnungseingriff der dritten Getriebestufe.

Als günstig hatte sich auch gezeigt, wenn bei der ersten Getriebestufe, die unmittelbar mit der Rotorwelle verbunden ist, das mit der Rotorwelle drehfest verbundene Antriebsritzel über ein Zwischenzahnrad oder mittels eines Antriebsriemens mit dem Abtriebsrad verbunden ist. Durch die Verwendung eines Zwischenzahnrades, dessen Drehachse nicht zwingenderweise in einer Ebene mit der Spindellängsachse und der Rotorwellenachse liegen muss, wird sichergestellt, dass die Baugröße des Antriebsmotors, insbesondere dessen Durchmesser, nicht mit dem Getriebe kollidiert.

Um die Gefahr einer Überlastung der Bohrmaschine und insbesondere des Antriebsmotors und der Einsatzwerkzeuge zu verhindern, hat es sich auch als günstig gezeigt, wenn der das Abtriebsrad der ersten Getriebestufe und das Antriebsritzel der zweiten Getriebestufe tragenden Getriebewelle eine Sicherungskupplung zugeordnet ist. Durch diese Sicherungskupplung wird erreicht, dass bei einem Überschreiten eines Grenzmoments, welches beispielsweise beim Verkannten des Einsatzwerkzeugs im Werkstück auftreten kann, die Sicherungskupplung auslöst, wodurch die Gefahr einer Überlastung der Bohrmaschine reduziert wird. Die Antriebsritzel und die Abtriebsräder der einzelnen Getriebestufen können dabei entweder integral mit der Getriebewelle gebildet werden oder auf der jeweiligen Getriebewelle montiert werden.

Bewährt hat es sich auch, wenn eine Pinolenführung vorgesehen ist zur axialen Verstellung der Werkzeugspindel entlang der Spindellängsachse. Hierdurch wird eine einfache Möglichkeit geschaffen, die Werkzeugspindel axial entlang der Spindellängsachse zu verstellen

Als günstig hat es sich auch erwiesen, wenn der das Abtriebsrad der ersten Getriebestufe und das Antriebsritzel der zweiten Getriebestufe tragenden Getriebewelle ein Vorschubantrieb für die Pinolenführung zugeordnet ist. Hierdurch lässt sich eine Erhöhung des Axialhubes erreichen.

Um die Werkzeugspindel axial zu verstellen, hat es sich auch als besonders vorteilhaft erwiesen, wenn ein Verstellmittel zur axialen Verstellung der Werkzeugspindel vorgesehen ist. Dieses Verstellmittel kann dabei beispielsweise als ein Hebel ausgebildet werden, der vom Nutzer gedreht werden kann, um die Werkzeugspindel axial zu verstellen. Der Hebel kann dabei insbesondere auch lösbar an dem Gehäuse aufgenommenen sein, vorzugsweise mittels eines Form- und/oder Kraftschlusses.

Als günstig hat es sich auch erwiesen, wenn die Höhe der Bohrmaschine 200 mm oder weniger, bevorzugt 180 mm oder weniger und besonders bevorzugt 170 mm oder weniger und ganz besonders bevorzugt 169 mm beträgt. Hierdurch wird sichergestellt, dass die Bohrmaschine auch bei besonders räumlich beengten Verhältnissen verwendet werden kann, beispielsweise in einem Doppel-T Träger. Unter der Höhe - auch als Bauhöhe bezeichnet - der Bohrmaschine wird dabei deren maximale axiale Erstreckung entlang einer Achse verstanden, die sich senkrecht zu der Auflagefläche des Magnetfußes erstreckt.

Auch als vorteilhaft hat es sich erwiesen, wenn die Länge der Bohrmaschine 400 mm oder weniger, bevorzugt 350 mm oder weniger und besonders bevorzugt 280 mm oder weniger und ganz besonders bevorzugt 265 mm beträgt. Hierdurch wird die Einsatzmöglichkeit der erfindungsgemäßen Bohrmaschine weiter verbessert und es ist möglich, die Bohrmaschine auch bei räumlich beengten Platzverhältnissen einzusetzen. Unter der Länge der Bohrmaschine wird dabei deren maximale axiale Erstreckung entlang der Längsachse verstanden, die sich parallel zu der Auflagefläche des Magnetfußes erstreckt.

Bewährt hat es sich zudem auch noch, wenn der Abstand der Rotorwellenlängsachse zu der Spindellängsachse 70 mm oder mehr, bevorzugt 90 mm oder mehr und besonders bevorzugt 110 mm oder mehr, und weiter vorzugsweise 190 mm oder weniger, bevorzugt 170 mm oder weniger und besonders bevorzugt 150 mm oder weniger und ganz besonders bevorzugt 115 mm beträgt.

Die Handhabung und der Transport der Bohrmaschine lässt sich noch dadurch weiter erleichtern, wenn ein vorzugsweise an dem Gehäuse gelagerter Handgriff vorgesehen ist. In diesem Zusammenhang hat es sich dann als besonders günstig erwiesen, wenn der Handgriff axial verstellbar an dem Gehäuse gelagert ist. Hierdurch lässt sich erreichen, dass der Handgriff nicht über die Bohrmaschine hinausragt, wenn dieser nicht benötigt wird. Zudem kann der Handgriff federbeaufschlagt in dem Gehäuse gelagert sein, wodurch es für den Nutzer vereinfacht wird, den Handgriff aus dem Gehäuse auszufahren und zu ergreifen.

Der Einsatzzweck der Bohrmaschine lässt sich noch dann weiter steigern, wenn zur Energieversorgung des Elektromotors ein Akkumulator vorgesehen ist. Insbesondere, wenn an abgelegenen Stellen mit der Bohrmaschine ein Loch gebohrt werden soll muss in diesem Fall dann nämlich kein zusätzliches Netzkabel mitgeführt werden.

Als vorteilhaft hat es sich auch erwiesen, wenn eine Antriebselektronik vorgesehen ist, die in dem Gehäuse aufgenommen ist. Hierdurch ist es letztlich möglich, lediglich ein einziges Gehäuse bereitzustellen, in dem sowohl der Antriebsmotor als auch die Antriebselektronik aufgenommen sind. Dies wirkt sich dabei positiv auf die Gestaltung der Bohrmaschine aus und reduziert die Herstellungskosten. Somit kann das Gehäuse also sowohl den Elektromotor als auch die Antriebselektronik aufnehmen.

Im Folgenden wird die Erfindung an einem in den Zeichnungen dargestellten Ausführungsbeispiel näher erläutert; es zeigen:
- Fig. 1: eine perspektivische Ansicht einer Bohrmaschine,
- Fig. 2: eine Schnittansicht durch einen Längsschnitt der Bohrmaschine mit einer Werkzeugspindel in einer ersten Stellung,
- Fig. 3: die Schnittansicht aus der Figur 2 mit der Werkzeugspindel in einer zweiten Stellung,
- Fig. 4: eine Detailansicht einer ersten Ausführungsform eines Getriebes der Bohrmaschine, und
- Fig. 5: eine Detailansicht einer zweiten Ausführungsform des Getriebes der Bohrmaschine.

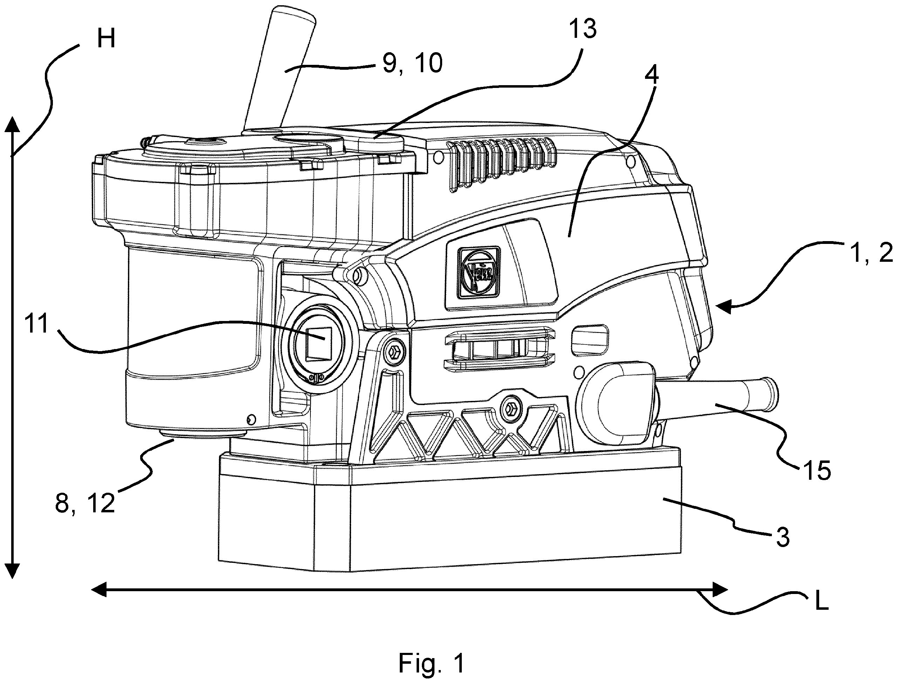

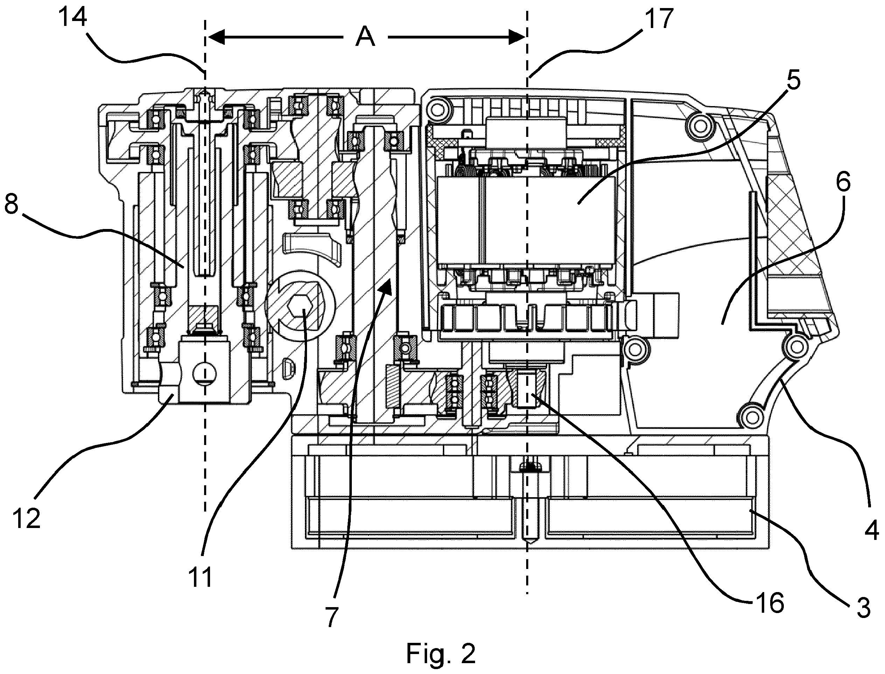

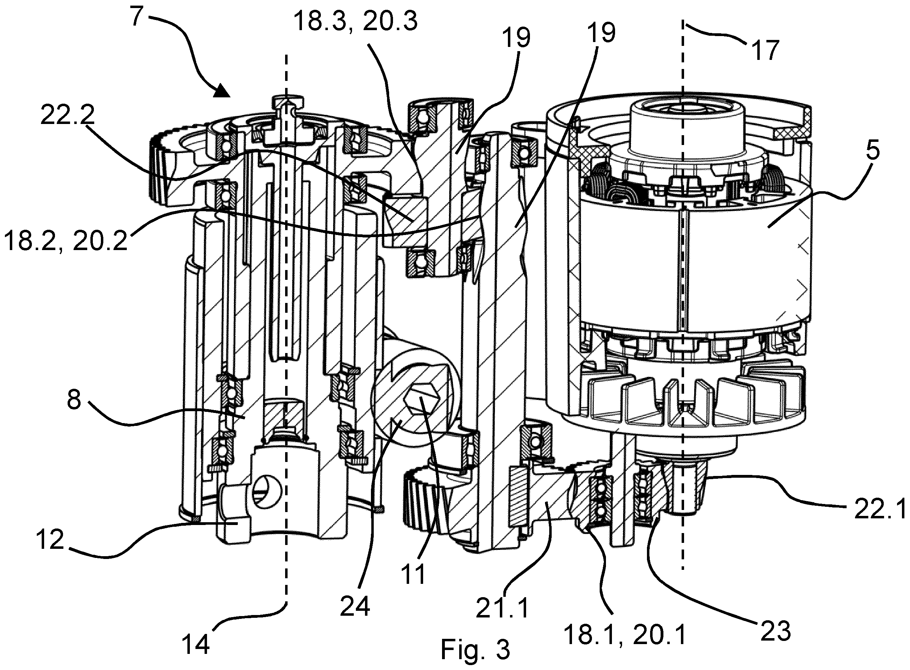

Figur 1 zeigt in einer perspektivischen Ansicht eine Bohrmaschine 1, nämlich eine Magnetkernbohrmaschine 2. Diese weist einen Magnetfuß 3 auf, mit der die Magnetkernbohrmaschine 2 an einer magnetisierbaren Oberfläche lösbar befestigt werden kann. Die resultierende Haltekraft des Magnetfußes 3 kann der Nutzer dabei elektrisch zwischen einer maximalen Haltekraft und einer minimalen Haltekraft verstellen. Zudem ist der Figur 1 auch zu entnehmen, dass die Bohrmaschine 1 ein Gehäuse 4 aufweist, in dem - wie insbesondere noch bezüglich der nachstehenden Figuren 2 und 3 noch näher beschrieben ist - entnommen werden kann, ein Antriebsmotor 5 und eine Antriebselektronik 6 aufgenommen sind, wobei der Antriebsmotor 5 über ein Getriebe 7 eine Werkzeugspindel 8 drehend antreibt. Über einen Hebel 9, der als ein Verstellmittel 10 dient und der in eine benachbart zu dem Gehäuse 4 ausgebildete Aufnahme 11 eingesetzt werden kann, kann der Nutzer die Werkzeugspindel 8 und ein in einer mit der Werkzeugspindel 8 verbundenen Werkzeugaufnahme 12 eingesetztes Einsatzwerkzeug, vorzugsweise eine Bohrkrone, axial entlang einer Spindellängsachse 14 verstellen. Die Aufnahme 11 ist bei der dargestellten Bohrmaschine 1 zweifach vorgesehen und auf beiden Seiten ausgebildet.

Die in der Figur 1 dargestellte Bohrmaschine 1 hat dabei eine Höhe H von weniger als 200, nämlich genau 169 mm. Zudem beträgt die Länge L der Bohrmaschine 1 weniger als 400 mm, nämlich 265 mm. Zwar ist die Energieversorgung der in der Figur 1 dargestellten Magnetkernbohrmaschine 2 durch eine Netzspannung realisiert, wie dem angedeuteten Netzkabel 15 entnommen werden kann, allerdings ist es im Rahmen der Erfindung explizit auch vorgesehen, dass zur Energieversorgung der Magnetkernbohrmaschine 2 ein Akkumulator vorgesehen ist. Die Figur 1 zeigt zudem, dass an dem Gehäuse 4 ein Handgriff 13 angeordnet ist, der vom Nutzer ergriffen werden kann, um die Bohrmaschine 1 zu tragen. Der Handgriff 13 ist dabei an dem Gehäuse 4 verstellbar gelagert, wodurch es möglich ist, diesen in dem Gehäuse 4 zu versenken, so dass er die Größe der Bohrmaschine 1 nicht nachteilig verändert, wenn er nicht gebraucht werden sollte.

Figur 2 zeigt in einer Schnittansicht entlang eines Längsschnitts den Aufbau der Bohrmaschine 1. Dieser Abbildung ist dabei insbesondere zu entnehmen, dass der Antriebsmotor 5 eine Rotorwelle 16 mit einer Rotorwellenlängsachse 17 aufweist, die über das Getriebe 7 mit der Werkzeugspindel 8 kraftübertragend verbunden ist. Die Spindellängsachse 14 der Werkzeugspindel 8 ist dabei parallel und radial versetzt zu der Rotorwellenlängsachse 17 ausgerichtet. An dem Ende der Werkzeugspindel 8, das in Richtung des Magnetfußes 3 zeigt, ist die Werkzeugaufnahme 12 angeordnet, in die eine Bohrkrone eingesetzt werden kann. In dem gezeigten Ausführungsbeispiel ist der Antriebsmotor 5 als ein elektrisch kommutierter Antriebsmotor 5 ausgebildet. Dieser Antriebsmotor 5, der auch als EC-Antriebsmotor 5 bezeichnet wird, zeichnet sich durch eine sehr geringe Bauhöhe und einen gegenüber einem Universalmotor reduzierten Wartungsaufwand aus. Der Abstand A der Rotorwellenlängsachse 17 zu der Spindellängsachse 14 beträgt hierbei 115 mm und damit zwar mehr als 70 mm und gleichzeitig weniger als 190 mm. Weiterhin ist der Figur 2 auch zu entnehmen, dass sowohl der Antriebsmotor 5 als auch die Antriebselektronik 6 beide in dem Gehäuse 4 aufgenommen sind.

Aus der in der Figur 3 dargestellten Detailansicht auf eine erste Ausführungsform des Getriebes 7 der Bohrmaschine 1 wird deutlich, dass das Getriebe 7 der Bohrmaschine 1 eine erste Getriebestufe 18.1, eine zweite Getriebestufe 18.2 und eine dritte Getriebestufe 18.3 umfasst, also insgesamt drei Getriebestufen 18.1, 18.2, 18.3 aufweist. Die einzelnen Getriebestufen 18.1, 18.2, 18.3 sind dabei in einer Reihenanordnung angeordnet und zwar so, dass die Getriebewellen 19 der Getriebestufen 18.1, 18.2, 18.3 in einer Ebene mit der Rotorwellenlängsachse 17 und der Spindellängsachse 14 liegen. Zudem lässt sich der Figur 3 auch entnehmen, dass die Verzahnungseingriffe 20.1, 20.2, 20.3 der einzelnen Getriebestufen 18.1, 18.2, 18.3 axial gestaffelt sind. Diese parallel zu der Rotorwellenlängsachse 17 orientierte axiale Staffelung erfolgt dabei so, dass der Verzahnungseingriff 20.1 der ersten Getriebestufe 18.1 näher an dem Magnetfuß 3 liegt als der Verzahnungseingriff 20.2 der zweiten Getriebestufe 18.2 und als der Verzahnungseingriff 20.3 der dritten Getriebestufe 18.3. Zudem liegt der Verzahnungseingriff 20.2 der zweiten Getriebestufe 18.2 näher an dem Magnetfuß 3, als der Verzahnungseingriff 20.3 der dritten Getriebestufe 18.3.

Der Figur 3 kann auch entnommen werden, dass eine Pinolenführung 24 vorgesehen ist zur axialen Verstellung der Werkzeugspindel 8 entlang der Spindellängsachse 14, was durch das Drehen des Hebels 1 erreicht werden kann. Bei diesem Ausführungsbeispiel des Getriebes 7 kann der Getriebewelle 19, die das Abtriebsrad 21.1 der ersten Getriebestufe 18.1 und das Antriebsritzel 22.2 der zweiten Getriebestufe 18.2 trägt, zudem ein Vorschubantrieb für die Pinolenführung 24 zugeordnet sein. Wie die Figur 3 zudem auch zeigt, ist bei der ersten Getriebestufe 18.1, die unmittelbar mit der Rotorwelle 16 verbunden ist, das mit der Rotorwelle 16 drehfest verbundene Antriebsritzel 22.1 über ein Zwischenzahnrad 23 mit dem Abtriebsrad 21.1 der ersten Getriebestufe 18.1 verbunden. Der Getriebewelle 19, die das Abtriebsrad 21.1 der ersten Getriebestufe 18.1 und das Antriebsritzel 22.2 der zweiten Getriebestufe 18.2 trägt, kann zudem eine Sicherungskupplung zugeordnet sein, die beim Erreichen einer Grenzbelastung auslöst und die Kraftübertragung zwischen dem Antriebsmotor 5 und der Werkzeugspindel 8 unterbricht.

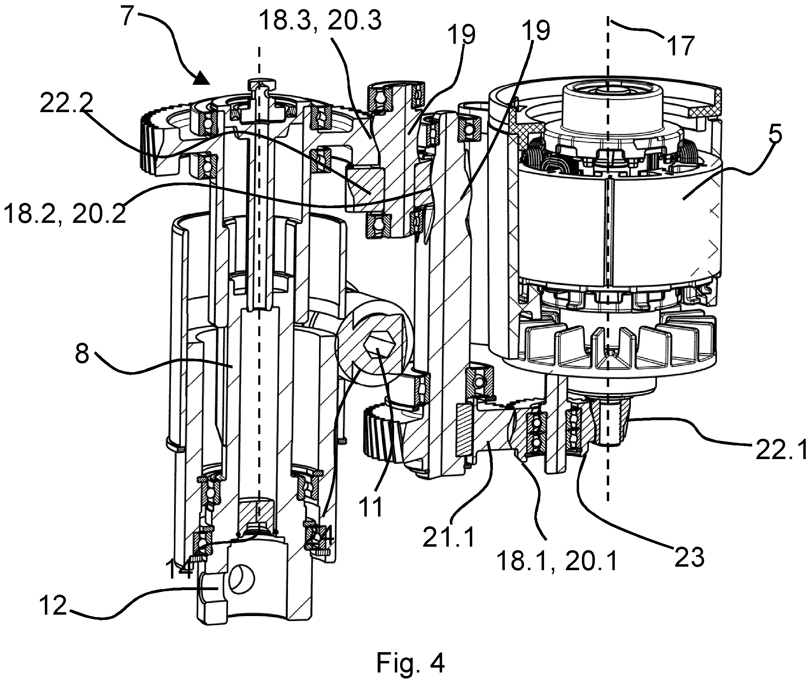

Während in der in der Figur 3 dargestellten Ansicht des Getriebes 7 die Werkzeugaufnahme 12 und die Werkzeugspindel 8 zurückgezogen sind, zeigt die Figur 4 die Werkzeugaufnahme 12 und die Werkzeugspindel 8 in ausgefahrenem Zustand, der dadurch erreicht wird, dass der Nutzer ausgehend von der zurückgezogenen Stellung, die in der Figur 3 dargestellt ist, den Hebel 9 verstellt. Hierdurch wird durch die Pinolenführung 24 die Werkzeugspindel 8 axial verstellt.

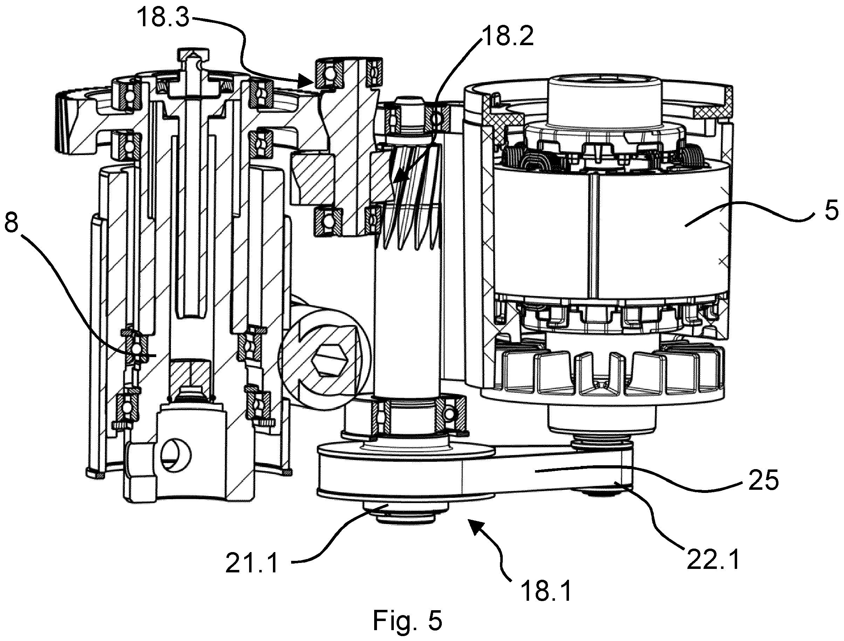

Figur 5 zeigt eine zweite Ausführungsform des Getriebes 7. Dieses unterscheidet sich dabei von dem in den Figuren 2 bis 4 dargestellten Getriebe 7 dadurch, dass bei der ersten Getriebestufe 18.1, die unmittelbar mit der Rotorwelle 16 verbunden ist, das mit der Rotorwelle 16 drehfest verbundene Antriebsritzel 22.1 über einen Antriebsriemen 25 mit dem Abtriebsrad 21.1 der ersten Getriebestufe 18.1 verbunden ist. Hierdurch kann auf die Verwendung des Zwischenzahnrads 23 verzichtet werden.

### Bezugszeichenliste

- 1: Bohrmaschine
- 2: Magnetkernbohrmaschine
- 3: Magnetfuß
- 4: Gehäuse
- 5: Antriebsmotor
- 6: Antriebselektronik
- 7: Getriebe
- 8: Werkzeugspindel
- 9: Hebel
- 10: Verstellmittel
- 11: Aufnahme
- 12: Werkzeugaufnahme
- 13: Handgriff
- 14: Spindellängsachse
- 15: Netzkabel
- 16: Rotorwelle
- 17: Rotorwellenlängsachse
- 18.1: erste Getriebestufe
- 18.2: zweite Getriebestufe
- 18.3: dritte Getriebestufe
- 19: Getriebewelle
- 20.1: Verzahnungseingriff der ersten Getriebestufe
- 20.2: Verzahnungseingriff der zweiten Getriebestufe
- 20.3: Verzahnungseingriff der dritten Getriebestufe
- 21.1: Abtriebsrad der ersten Getriebestufe
- 22.1: Antriebsritzel der ersten Getriebestufe
- 22.2: Antriebsritzel der zweiten Getriebestufe
- 23: Zwischenzahnrad
- 24: Pinolenführung
- 25: Antriebsriemen
- A: Abstand
- H: Höhe
- L: Länge

## Patentansprüche

1. Bohrmaschine (1), insbesondere Magnetkernbohrmaschine (2), mit einem Magnetfuß (3) zum lösbaren befestigen der Bohrmaschine (1) an einer Oberfläche, mit einem in einem Gehäuse (4) aufgenommenen Antriebsmotor (5), der eine Rotorwelle (16) mit einer Rotorwellenlängsachse (17) aufweist, die über ein Getriebe (7) mit einer eine Spindellängsachse (14) aufweisenden Werkzeugspindel (8) kraftübertragend verbunden ist, sowie mit einer mit der Werkzeugspindel (8) verbundenen Werkzeugaufnahme (12) zur Aufnahme eines Bohrwerkzeugs, wobei die Spindellängsachse (14) im Wesentlichen parallel zu der Rotorwellenlängsachse (17) ausgerichtet ist, die Werkzeugspindel (8) axial entlang der Spindellängsachse (14) relativ zu dem Antriebsmotor (5) und dem Magnetfuß (3) verstellbar ist, und der Antriebsmotor (5) als ein elektrisch kommutierter Antriebsmotor (5) ausgebildet ist.

2. Bohrmaschine (1) nach Anspruch 1, **dadurch gekennzeichnet, dass** die Rotorwellenlängsachse (17) radial versetzt zu der Spindellängsachse (14) orientiert ist.

3. Bohrmaschine (1) nach Anspruch 1 oder 2, **dadurch gekennzeichnet, dass** das Getriebe (7) eine erste Getriebestufe (18.1), eine zweite Getriebestufe (18.2) und eine dritte Getriebestufe (18.3) umfasst.

4. Bohrmaschine (1) nach Anspruch 3, **dadurch gekennzeichnet, dass** die Getriebestufen (18.1), (18.2), (18.3) in einer Reihenanordnung angeordnet sind.

5. Bohrmaschine (1) nach Anspruch 3 oder 4, **dadurch gekennzeichnet, dass** die Getriebewellen (19) der Getriebestufen (18.1), (18.2), (18.3) in einer Ebene mit der Rotorwellenlängsachse (17) und der Spindellängsachse (14) liegen.

6. Bohrmaschine (1) nach einem der Ansprüche 3 bis 5, **dadurch gekennzeichnet, dass** die Verzahnungseingriffe (20.1), (20.2), (20.3) der einzelnen Getriebestufen (18.1), (18.2), (18.3) axial gestaffelt sind.

7. Bohrmaschine (1) nach einem der Ansprüche 3 bis 6, **dadurch gekennzeichnet, dass** der Verzahnungseingriff (20) der ersten Getriebestufe (18.1) näher an dem Magnetfuß (3) liegt als der Verzahnungseingriff (20.2) der zweiten Getriebestufe (18.2) und als der Verzahnungseingriff (20.3) der dritten Getriebestufe (18.3), und dass der Verzahnungseingriff (20.2) der zweiten Getriebestufe (18.2) näher an dem Magnetfuß (3) liegt, als der Verzahnungseingriff (20.3) der dritten Getriebestufe (18.3).

8. Bohrmaschine (1) nach einem der Ansprüche 3 bis 7, **dadurch gekennzeichnet, dass** bei der ersten Getriebestufe (18.1), die unmittelbar mit der Rotorwelle (16) verbunden ist, das mit der Rotorwelle (16) drehfest verbundene Antriebsritzel (22.1) über ein Zwischenzahnrad (23) oder mittels eines Antriebsriemens (25) mit dem Abtriebsrad (21.1) verbunden ist.

9. Bohrmaschine (1) nach einem der Ansprüche 3 bis 8, **dadurch gekennzeichnet, dass** der das Abtriebsrad (21.1) der ersten Getriebestufe (18.1) und das Antriebsritzel (22.2) der zweiten Getriebestufe (18.2) tragenden Getriebewelle (19) eine Sicherungskupplung zugeordnet ist.

10. Bohrmaschine (1) nach einem der Ansprüche 1 bis 9, **dadurch gekennzeichnet, dass** eine Pinolenführung (24) vorgesehen ist zur axialen Verstellung der Werkzeugspindel (8) entlang der Spindellängsachse (14).

11. Bohrmaschine (1) nach einem der Ansprüche 3 bis 10, **dadurch gekennzeichnet, dass** der das Abtriebsrad (21.1) der ersten Getriebestufe (18.1) und das Antriebsritzel (22.2) der zweiten Getriebestufe (18.2) tragenden Getriebewelle (19) ein Vorschubantrieb (25) für die Pinolenführung (24) zugeordnet ist.

12. Bohrmaschine (1) nach einem der Ansprüche 1 bis 11, **dadurch gekennzeichnet, dass** ein Verstellmittel (10) zur axialen Verstellung der Werkzeugspindel (8) vorgesehen ist.

13. Bohrmaschine (1) nach einem der Ansprüche 1 bis 12, **dadurch gekennzeichnet, dass** die Höhe (H) der Bohrmaschine (1) 200 mm oder weniger, bevorzugt 180 mm oder weniger und besonders bevorzugt 170 mm oder weniger und ganz besonders bevorzugt 169 mm beträgt.

14. Bohrmaschine (1) nach einem der Ansprüche 1 bis 13, **dadurch gekennzeichnet, dass** die Länge (L) der Bohrmaschine (1) 400 mm oder weniger, bevorzugt 350 mm oder weniger und besonders bevorzugt 280 mm oder weniger und ganz besonders bevorzugt 265 mm beträgt.

15. Bohrmaschine (1) nach einem der Ansprüche 1 bis 14, **dadurch gekennzeichnet, dass** der Abstand (A) der Rotorwellenlängsachse (17) zu der Spindellängsachse (14) 70 mm oder mehr, bevorzugt 90 mm oder mehr und besonders bevorzugt 110mm oder mehr, und weiter vorzugsweise 190 mm oder weniger, bevorzugt 170 mm oder weniger und besonders bevorzugt 150 mm oder weniger und ganz besonders bevorzugt 115 mm beträgt.

16. Bohrmaschine (1) nach einem der Ansprüche 1 bis 15, **dadurch gekennzeichnet, dass** ein vorzugsweise an dem Gehäuse (4) gelagerter Handgriff (13) vorgesehen ist.

17. Bohrmaschine (1) nach Anspruch 16, **dadurch gekennzeichnet, dass** der Handgriff (13) axial verstellbar an dem Gehäuse (4) gelagert ist.

18. Bohrmaschine (1) nach einem der Ansprüche 1 bis 17, **dadurch gekennzeichnet, dass** zur Energieversorgung des Antriebsmotors (5) ein Akkumulator vorgesehen ist.

19. Bohrmaschine (1) nach einem der Ansprüche 1 bis 18, **dadurch gekennzeichnet, dass** eine Antriebselektronik (6) vorgesehen ist, die in dem Gehäuse (4) aufgenommen ist.
